# EUROPEAN PATENT APPLICATION

(11) **EP 1 743 916 A2**
(43) Date of publication of application: **17.01.2007**
(21) Application number: 06250432.9
(22) Date of filing: 26.01.2006
(51) Int. Cl.: C08J 9/28, C08L 5/00

(54) **Polysaccharide foamable composition, foamed material, and its production method**

(30) Priority: 07.06.2005 JP 2005166971
(71) Applicant: KABUSHIKI KAISHA TOSHIBA, Tokyo 105-8001 (JP)
(72) Inventor: Yoshida, Kentaro, c/o Toshiba Corporation, Tokyo 105-8001 (JP); Oyasato, Yumiko, c/o Toshiba Corporation, Tokyo 105-8001 (JP)
(74) Representative: Granleese, Rhian Jane

(57) **Abstract**

Disclosed is a foaming material composite including a water-soluble polysaccharide having ester linkage or amide linkage, a foaming agent, and a plasticizing agent.

## Description

This invention relates to a foaming material composite, a foamed material, and a method of reproducing a foamed material.

In recent years, in a viewpoint of natural environmental protection, there is an increasing demand for biodegradable resins and the molded products thereof which can be decomposed in natural environments, so that studies on biodegradable resins such as aliphatic polyester, starch, etc. are now actively performed. These materials however are too weak in buffering strength and too poor in restoring force to repeatedly use them as a buffering/structural material. Further, although these materials are water-degradable, these materials cannot be completely dissolved in water. Therefore, these materials cannot be easily disposed and reproduced. Furthermore, since these materials are enabled to enhance their performances through the employment of petroleum modifying agents, these materials cannot be said as a material which is completely unharmful to environments.

On the other hand, natural water-soluble polysaccharides are excellent in safety and when they are released into natural environments, they can be readily decomposed by microorganisms and vanished. Among these polysaccharides, especially those which are capable of forming gel are widely employed as a thickener or a gelling agent in various fields such as food, cosmetics, toiletry industries. Furthermore, since these polysaccharides are moldable, they can be employed as edible film such as a medicinal wafer. However, this edible film is thin and poor in mechanical strength and hence is not suited for use as a structural material or a buffering material. If this edible film is to be formed into a thick sheet in order to enhance the mechanical strength thereof, the molding of them would become difficult. Additionally, the material cost as well as energy cost for drying them would be increased.

Among the natural water-soluble polysaccharides, alginic acid which is one component of seaweeds can be collected from seaweeds which may become obstacles in the navigation of ships. Further, since alginic acid can be obtained using, as a raw material, waste materials which do not affect the food problem, it is possible to suppress the manufacturing cost thereof to a minimum. Since alginic acid is water-soluble, alginic acid is considered promising as a future resin material which is capable of minimizing the environmental load. Therefore, it has been tried to manufacture a biodegradable polymer by using alginic acid. The biodegradable polymer thus obtained is a material having water-holding capacity which can be obtained by mixing alginic acid or metallic salts thereof with a foaming agent, a plasticizing agent, a crosslinking agent, etc. Therefore, the surface of the biodegradable polymer is hard and is not compressible and hence is not suited for use as a buffering material or a structural material.

A foaming material composite according to one aspect of the present invention comprises a water-soluble polysaccharide having ester linkage or amide linkage; a foaming agent; and a plasticizing agent.

A foamed material according to another aspect of the present invention comprises a matrix containing a water-soluble polysaccharide having ester linkage or amide linkage, a foaming agent, and a plasticizing agent; and cells dispersed in the matrix and created by the foaming agent.

A method of producing a foamed material according to another aspect of the present invention comprises forming an aqueous solution by dissolving the aforementioned foamed material in water; foaming the aqueous solution; and removing the water from the aqueous solution to obtain a reproduced foamed material.

This summary of the invention does not necessarily describe all necessary features so that the invention may also be a sub-combination of these described features.

The invention can be more fully understood from the following detailed description when taken in conjunction with the accompanying drawings, in which:

The single Figure is a graph illustrating the compression properties of foamed material.

Next, the present invention will be explained with reference to specific examples as follows.

As a result of intensive studies made by the present inventors on the foaming materials of biological origin such as polysaccharides, it has been found out that the following effects can be obtained by using water-soluble polysaccharides having ester linkage or amide linkage. Namely, it has been found possible to maintain a foamed state without necessitating the employment of a coagulant and to secure such a high degree of buffering strength and restoring force that the conventional foaming materials of biological origin have failed to achieve. Moreover, since it is no longer required to employ any coagulant in this case, the foaming materials can be easily disposed and the water-solubility of the foaming materials can be improved. The present invention has been accomplished based on the aforementioned findings.

The foaming material composite according to one embodiment of the present invention comprises a water-soluble polysaccharide having ester linkage or amide linkage; a foaming agent; and a plasticizing agent. The foamed material according to another embodiment of the present invention can be obtained by cast-molding this foaming material composite and by foaming this foaming material composite.

As for specific examples of the water-soluble polysaccharide having ester linkage or amide linkage, the following materials can be employed. Namely, they include alginic acid derivatives where the carboxylic moiety thereof is esterified such as propylene glycol alginate; hyaluronic acid derivatives where the carboxylic moiety thereof is esterified such as propylene glycol hyaluronate; alginic acid derivatives where the carboxylic moiety thereof is amidated such as alginic methyl amide; hyaluronic acid derivatives where the carboxylic moiety thereof is amidated such as hyaluronic methyl amide; derivatives where carrageenan, agar, xanthan gum, Gellan gum, pectin, chitosan, starch, amylose or amylopectin is esterified or amidated; artificial derivatives where aforementioned materials are artificially modified so as to become physiologically acceptable; esters where aforementioned materials are condensed through dehydration with alcohols having an optional number of carbon atom; artificial derivatives of polysaccharides which ordinarily do not contain carboxylic group such as carboxymethyl cellulose, carboxymethyl dextran, carboxymethyl pullulan; and chitin derivatives where carboxyl group is introduced such as carboxylmethyl chitin. Among these materials, the employment of propylene glycol alginate is especially preferable since it is abundant in supply and hence can be most easily available.

The esterified derivatives of alginic acid are those to be obtained as follows. Alginic acid contains a couple of hydroxyl groups and one carboxyl group. This carboxyl group is reacted with mono- or polyhydric alcohols or alkylene oxides to modify the alginic acid into a material having ester linkage. As for alcohols, it is possible to employ monohydric, dihydric or trihydric alcohol having alkyl group having 1-5 carbon atoms. Among them, dihydric alcohol is most preferable in viewpoint of hydrophilicity of the product, surface activity and practicability thereof. Specific examples of dihydric alcohol include propylene glycol, ethylene glycol, glycerin, etc. As for the alkylene oxides, it is possible to employ those having alkyl group having 1-5 carbon atoms. Specific examples of alkylene oxides include ethylene oxide, propylene oxide, butene oxide, etc. Alternatively, it is also possible to those where hydroxyl group of alkylene oxide is reacted with a material having carboxyl group to obtain a material having ester linkage, especially organic acids having 1-5 carbon atoms. It is also possible to employ lactic acid or glycolic acid having both carboxyl group and hydroxyl group.

The amidated derivatives of alginic acid are those to be obtained by reacting alginic acid with mono- or poly-valent amines. As for amines, it is possible to employ primary, secondary or tertiary amine having alkyl group having 1-5 carbon atoms. Among them, primary amine is most preferable. More specifically, it is possible to employ methyl amine, ethyl amine, dimethyl amine, diethyl amine, trimethyl amine, triethyl amine, methylethyl amine.

An esterified derivative of alginic acid may be combined with an amidated derivative of alginic acid to employ them as a water-soluble polysaccharide. In this case, the content of the amidated derivative should preferably be confined to not more than 70 wt% based on the entire weight of water-soluble polysaccharide. If the content of the amidated derivative exceeds 70 wt%, there may be possibilities of raising a problem that the buffering property of foamed material may not be derived. More preferably, the content of the amidated derivative should be confined to not more than 40 wt% based on the entire weight of water-soluble polysaccharide. Most preferably, all (100 wt%) of the water-soluble polysaccharide is constituted by esterified derivative.

The aforementioned water-soluble polysaccharides are dissolved in water together with a foaming agent and a plasticizing agent to obtain a foaming material composite according to one embodiment of the present invention. The viscosity of this composite should preferably be confined within the range of 1.0 × 10¹(Pa·s) to 1.5 × 10⁷(Pa·s). Although the foaming material composite according to one embodiment of the present invention is prepared by dissolving it in water, if the viscosity of the resultant solution is too low, the film of foamed state may be defoamed. Therefore, the lower limit of viscosity of the solution is confined to 1.0 × 10¹(Pa·s). On the other hand, in order to secure a predetermined magnification and buffering properties of foamed material, the upper limit of viscosity of the foaming material composite according to one embodiment of the present invention is confined to 1.5 × 10⁷(Pa·s).

Fundamentally, the viscosity of the foaming material composite is determined by the kinds, polymerization degree, weight average molecular weight and content of the water-soluble polysaccharides. Therefore, the content of the water-soluble polysaccharides may be controlled depending on the kinds of the water-soluble polysaccharides so as to obtain the aforementioned range of viscosity. In order to secure an excellent condition of foaming of the foamed material, it is preferable to take the viscosity of aqueous solution as a standardized criterion. Especially when the suppression of brittleness of material, the easiness of working, and the durability of polymer are taken into account, the viscosity of aqueous solution should preferably be confined within the aforementioned range. If the foamed material is to be employed as a buffering material, the viscosity of the foaming material composite should preferably be confined within the range of 1.8 × 10²(Pa·s) to 6.0 × 10⁴(Pa·s) in order to enable the foamed material to exhibit excellent mechanical properties.

The weight average molecular weight of the water-soluble polysaccharides can be optionally determined depending on the kinds thereof. For example, in the case where propylene glycol alginate is to be employed, the weight average molecular weight thereof should preferably be confined within the range of 70,000 to 100,000, which corresponds to the range of about 299 to 427 in polymerization degree. Further, in the case where propylene glycol hyaluronate is to be employed, the weight average molecular weight thereof should preferably be confined within the range of 100,000 to 150,000, which corresponds to the range of about 220 to 331 in polymerization degree. Generally speaking, as the weight average molecular weight of the water-soluble polysaccharides increases, the viscosity thereof increases, rendering the water-soluble polysaccharides to become difficult to dissolve in water, and at the same time the buffering properties of the foamed material tend to deteriorate. Therefore, the upper limit of the weight average molecular weight should preferable be confined to about 200,000 at most.

As for the foaming agent, it is possible to employ a surfactant. Specifically, it is possible to employ an ionic surfactant or a nonionic surfactant. The ionic surfactant may be selected, for example, from sodium stearate, sodium dodecyl sulfate, α-olefin sulfonate, sulfoalkyl amide, monocarboxy coco imidazoline compound, dicarboxy coco imidazoline compound, and sulfonated aliphatic polyoxyethylene quaternary nitrogen compound. On the other hand, the nonionic surfactant may be selected, for example, from octylphenol ethoxylate, modified linear aliphatic polyethers, and sorbitan esters. The foaming agent may be optionally selected taking water-solubility, safety and biodegradability into consideration.

The content of the foaming agent may be generally about 1-10% by weight based on 100% by weight of the foaming material composite. If the content of the foaming agent is less than 1% by weight, it may become difficult to obtain sufficient effects of the foaming agent. On the other hand, if the content of the foaming agent exceeds 10% by weight, the mechanical properties and environmental accommodation which the foamed material inherently have may be deteriorated.

As for the plasticizing agent, it can be selected from glycerol, glucose, polyhydric alcohol, triethanol amine and stearate. The plasticizing agent is effective in giving flexibility to the foamed material that has been foamed and in minimizing the shrinkage of foamed material on the occasion of air-drying.

The content of the plasticizing agent may be generally about 20-40% by weight based on 100% by weight of the foaming material composite. If the content of the plasticizing agent is less than 20% by weight, it may become difficult to obtain sufficient effects of the plasticizing agent. On the other hand, if the content of the plasticizing agent exceeds 40% by weight, the mechanical properties and environmental accommodation which the foamed material inherently have may be deteriorated.

If required, an oligomer or polymer foam modifier may be incorporated into the foaming material composite according to the embodiment of the present invention. The incorporation of foaming modifier in the foaming material composite is effective in improving the flexibility and tenacity of the foamed material. As for specific examples of the foam modifier, they include, for example, polyethylene glycol, guar gum, albumin, gelatin, carboxymethyl cellulose, hydroxyethyl cellulose, hydroxypropyl cellulose, polyacryl amide, polyacrylic acid, polyvinyl alcohol, polyvinyl pyrrolidone, polyoxazoline, and polyethylene imine. If these foam modifiers are to be employed for obtaining a sufficient effect thereof, the content thereof should preferably be about 1% by weight based on 100% by weight of the foaming material composite. However, if the content of these foam modifiers is excessive, it may give bad effects to the mechanical properties and environmental accommodation which the foamed material inherently have. Therefore, the content of these foam modifiers should preferably be limited at most to 3% by weight based on 100% by weight of the foaming material composite.

Further, it is possible to employ a salt of water-soluble polysaccharide as a foam modifier. Specific examples of the salt useful include, for example, alginate and hyaluronate, more specifically, sodium alginate and sodium hyaluronate. As for the alginate, it is possible to employ alkali metal salts including sodium salt and alkaline earth metal salts including calcium. The incorporation of these salts is effective in obtaining a foamed material which is hard and strong. If salts of water-soluble polysaccharide are to be employed, the content thereof may be at most not more than 90% by weight based on a total of the salts of water-soluble polysaccharide and the aforementioned water-soluble polysaccharide having ester linkage or amide linkage. If the content of the salts exceeds 90% by weight, it may become difficult to maintain the foamed state and also may give rise a problem that the buffering property of foamed material may be deteriorated.

The viscosity of the salts of water-soluble polysaccharide, as they are dissolved in water, should preferably be confined to the range of 1.0 × 10¹(Pa·s) to 1.5 × 10⁷(Pa·s). The viscosity of the aqueous solution fluctuates depending on the kind, polymerization degree and weight average molecular weight of the salts of water-soluble polysaccharide. In order to secure an excellent condition of foaming of the foamed material, it is preferable to take the viscosity of aqueous solution as a standardized criterion. Especially when the suppression of brittleness of material, the easiness of working, and the durability of polymer are taken into account, the viscosity of aqueous solution should preferably be confined within the aforementioned range. If the foamed material is to be employed as a buffering material, the viscosity of the foaming material composite should preferably be confined within the range of 1.8 × 10²(Pa·s) to 6.0 × 10⁴(Pa·s) in order to enable the foamed material to exhibit excellent mechanical properties.

The foaming material composite according to the embodiment of the present invention may contain a foam stabilizer as required. In this case, the foam stabilizer may be selected, for example, from ammonium stearate, dodecyl alcohol, tetradecanol, hexadecanol, tridecyloxy polyethanol, and polyoxyethylated oleylamine. Although there is no particular limitation with regard to the content of the foam stabilizer, the effects of the foam stabilizer would be sufficiently secured as long as the content thereof is about 1% by weight based on 100% by weight of the foaming material composite in general. However, if the content of the foam stabilizer is excessive, it may give bad effects to the mechanical properties and environmental accommodation which the foamed material inherently have. Therefore, the content of the foam stabilizer should preferably be limited at most to 3% by weight based on 100% by weight of the foaming material composite.

The aforementioned water-soluble polysaccharide having ester linkage or amide linkage is dissolved in water together with a foaming agent and a plasticizing agent to obtain an aqueous solution having a predetermined viscosity, thus obtaining a foaming material composite according to one embodiment of the present invention. The foamed material according to another embodiment of the present invention can be manufactured according to the following method using this foaming material composite.

In the manufacture of the foamed material, a foaming material composite is mechanically stirred. This mechanical stirring can be performed using, for example, a pressure mixer, a continuous high-pressure foaming mixer, a kitchen mixer, a beater or a homogenizer. Depending on this bubbling period of time, the diameter of cells of foamed material to be obtained can be controlled. The diameter of cells of foamed material may be usually confined to the range of 5 - 2000 µm, more preferably confined to the range of 50 - 500 µm. It would be very difficult to control the diameter of bubbles in the foaming material composite to less than 5 µm. On the other hand, if there are bubbles having a larger diameter than 2000 µm in the foaming material composite, it would become difficult to maintain the state of foaming or would give rise to a problem that the buffering property of foamed material would be deteriorated. Incidentally, since the viscosity of aqueous solution when bubbling the composite greatly influences on the state of foaming of material and the properties of material, the viscosity of the foaming material composite is required to be controlled. Because of this reason, the viscosity of the foaming material composite should preferably be confined within the range of 1.0 × 10¹(Pa·s) to 1.5 × 10⁷(Pa·s).

It is possible, through the bubbling of the foaming material composite, to establish a wet state of foamed material. For example, this bubbled foaming material composite is introduced into a desired mold to form a layer of the foaming material composite. The thickness of this layer may range from as thin as not more than 1 mm or so to as thick as not less than 50 mm or so. Namely, the thickness of this layer may be optionally selected depending on the intended use of product. If the thickness of this layer is large, the layer may include therein a layer of "destroyed cell". This "destroyed cell" means a phenomenon that due to external factors such as shearing or cutting, the cells are destroyed, thus expanding the size of cells or partially vanishing the cells. The cells locating on the surface region of foamed material would not be prominently destroyed but maintain almost the same external appearance as that of the newly formed cells, thus exhibiting almost the same cell diameter and the same distribution of cell diameter as those of the newly formed cells.

The foamed material according to one embodiment of the present invention can be formed into not only a layer but also a shaped article. Incidentally, this shaped article means to indicate an artificially designed matter, a piece of work such as an industrial art object, a commercial product, etc. In this case, a mold such as a press mold, a mold employed in the injection molding of plastics, a mold employed in the blow molding of plastics, etc. By casting the foaming material composite by using these molds, a shaped article can be molded.

After being cast, the foamed material is then subjected to drying treatment such as air-drying or freeze-drying to remove water content to 10% or less, thus manufacturing a foamed material having a desired fine cell structure. The drying treatment should preferably be performed at room temperature (25°C) for 2 days or so, or at a temperature not higher than melting point of water under a pressure close to vacuum for all day long or so. If the drying treatment is not sufficiently performed, there may be raised a problem that a substance vulnerable to water would be badly affected by the evaporation or flow-in of water during the employment of foamed material. Further, in viewpoint of saving drying energy without damaging the properties of foamed material, it is especially preferable to perform a convection drying at room temperature (25°C). This convection drying at room temperature can be conducted using, for example, an apparatus which is capable of circulating air flow in a closed space (a desk ventilator or a local exhauster).

By conducting the drying treatment under predetermined conditions, the foamed material according to one embodiment of the present invention can be manufactured. Namely, the matrix of foamed material is constituted by a water-soluble polysaccharide having ester linkage or amide linkage, a foaming agent and a plasticizing agent, and cells having a predetermined size formed through the effect of foaming agent are distributed throughout the matrix. When the foamed material obtained is a sheet-like configuration, it can be applied as it is to a portion where there is a little possibility of contacting with water or moisture such as electronic equipments. Alternatively, sheets of sheet-like foamed material according to one embodiment of the present invention may be superimposed each other. In this case, a 2-ply or multi-ply sheet can be produced by mechanically or chemically adhering the superimposed foamed material to each other. More specifically, it is possible to form a composite structure by superimposing a plurality of sheets of foamed material by using an adhesive such as a two-part epoxy-based adhesive, a rubber type adhesive, a cyanoacrylic adhesive, a vinyl acetate emulsion, a starch paste, or a hot-melt adhesive with a film being interposed therebetween, examples of the film including a resin film, a polyimide-based adhesive film, an ethylene/acrylic acid-based copolymer adhesive film, etc. These materials, in a form of mono-ply or multi-ply sheet, can be placed in a water-resistant polymer bag for example and applied to a portion where there is a little possibility of contacting with water or moisture such as electronic equipments.

The foamed material according to one embodiment of the present invention can be employed as a raw material for medical materials, an immobilizing medium for cell culture, industrial, agricultural and food packaging materials (for example, food tray), etc. Further, it is also expected that the foamed material of the embodiment of the present invention can be utilized, in a form of sheet or other optional configuration, for the manufacture of packaging receptacle (one-way receptacle), toys, sheets, furniture components, construction materials, automobile components, electric household appliances, components for OA equipment, interior materials, housing components, etc.

Due to employment, as a buffering material or a structural material, of the foamed material according to one embodiment of the present invention, it may be compressed, deteriorating the function thereof as a buffering material. In that case, the foamed material can be reproduced according to the method of another embodiment of the present invention. Since the foamed material according to one embodiment of the present invention contains a water-soluble polysaccharide, it can be easily disposed after use. Namely, the foamed material according to one embodiment of the present invention can be reproduced by a method comprising forming an aqueous solution by dissolving the foamed material in water; foaming the aqueous solution; and removing the water from the aqueous solution to form a reproduced foamed material.

Fundamentally, water is added to a foamed material and then stirred and dissolved by a stirrer provided with stirring blades formed of Teflon (registered trademark) to obtain an aqueous solution. When dissolving a foamed material in water, it is desirable to control the quantity of water so as to enable the aqueous solution to have a viscosity which is confined within a prescribed range. More specifically, the viscosity of the aqueous solution having a foamed material dissolved therein should preferably be confined within the range of 1.0 × 10¹(Pa·s) to 1.5 × 10⁷(Pa·s). As already explained above, since the viscosity of this aqueous solution greatly influences the state of foam as well as the nature of foamed material to be obtained, it is required to control in advance the viscosity of the aqueous solution when bubbling the aqueous solution of foamed material. Irrespective of the concentration of foamed material, the foamed material can be easily dissolved in water within a period of several minutes to one hour, so that it would not take time in dissolving a foamed material on the occasion of reproducing it. The dissolution of foamed material may be performed using a heater-attached stirrer (hot stirrer) and raising the temperature of foamed material up to about 60°C. As a result, it is possible to promote the dissolution of foamed material. However, if a foamed material is heated to an excessively high temperature, the molecular weight of the water-soluble polysaccharide contained in the foamed material may be decreased, thus degrading entirely the mechanical properties of the foamed material. In order to avoid such a situation, the upper limit of heating temperature should preferably be confined to about 80°C.

It would become possible, as a foamed material is dissolved in water, to transport a larger quantity of foamed material as compared with the conventional foamed material when transporting the foamed material. This would be a great advantage when reproducing or disposing the foamed material. In the case of the conventional foamed material, it is only possible to transport a quantity of foamed material which is only 15 wt% of the maximum loading capacity of a vehicle. Whereas in the case of the foamed material of the embodiment of the present invention, most of the water-soluble polysaccharides can be dissolved in water at a concentration of 15% by weight or more. If the viscosity of aqueous solution is controlled to the range of 1.0 × 10¹(Pa·s) to 1.5 × 10⁷(Pa·s), the aqueous solution can be expanded to make it possible to reproduce the foamed material. If it was impossible to regulate the viscosity of the aqueous solution when transporting it, a virgin material may be incorporated into the aqueous solution immediately before the step of foaming the aqueous solution. Alternatively, water may be incorporated so as to adjust the viscosity of the aqueous solution, thus making it possible to obtain a reproduced foamed material excellent in quality.

In the manufacture of a reproduced foamed material, a foamed material is dissolved in water to obtain an aqueous solution thereof having a predetermined viscosity, which is then processed according to the aforementioned procedure to obtain the reproduced foamed material. More specifically, first of all, the aqueous solution is bubbled to make a wet state of foamed material. The diameter of cells on this occasion should preferably be controlled within the range of 5 - 2000 µm because of the aforementioned reasons.

Then, this foamed material is cast into a desired mold to form a layer having a prescribed thickness or a shaped article. After the casting, the layer or shaped article is subjected to drying treatment such as air-drying or freeze-drying at room temperature or a temperature of not more than melting point of water to remove water, thus manufacturing a reproduced foamed material having a desired fine cell structure.

As a result of the drying treatment under prescribed conditions, it is possible to manufacture a reproduced foamed material comprising a matrix constituted by a water-soluble polysaccharide having ester linkage or amide linkage, a foaming agent and a plasticizing agent, and cells formed by the foaming agent and distributed throughout the matrix. The reproduced foamed material to be obtained by the method according to the embodiment of the present invention is comparable in properties to the foamed material before use (virgin material). Therefore, this reproduced foamed material can be utilized for various applications in the same manner as the virgin material. Namely, when the foamed material reproduced is a sheet-like configuration, it can be applied as it is to a portion where there is a little possibility of contacting with water or moisture such as electronic equipments. Alternatively, sheets of sheet-like reproduced foamed material may be superimposed each other. In this case, a 2-ply or multi-ply sheet can be adhered to each other by mechanical or chemical means. More specifically, it is possible to form a composite structure by using adhesive, or by interposing a film between the sheets of reproduced foamed material. These materials, in a form of mono-ply or multi-ply sheet, can be placed in a water-resistant polymer bag for example and applied to a portion where there is a little possibility of contacting with water or moisture such as electronic equipments.

As explained above, since the foamed materials according to one embodiment of the present invention are manufactured from a composite containing specific water-soluble polysaccharides, a foaming agent and a plasticizing agent, it is possible to minimize environmental load. Furthermore, the foamed materials are excellent in buffering strength and restoring force. Additionally, since the foamed materials according to one embodiment of the present invention are water-soluble, they can be easily reproduced by the method according to the embodiment of the present invention. The reproduced foamed material is also capable of exhibiting excellent buffering strength and restoring force in the same manner as the virgin material, so that it can be re-used as a buffering material.

Next, examples of the present invention will be illustrate as follows.

### (Example 1)

First of all, propylene glycol alginate (KIMILOID) HV; weight average molecular weight Mw: about 100,000; KIMICA Co., Ltd. was prepared as a water-soluble polysaccharide and dissolved in water at a concentration of 5% by weight to obtain an aqueous solution. 1g of sodium dodecyl sulfate (Wako Junyaku Kogyo Ltd.) as a foaming agent, and 2.8 g of glycerin (Nacalai Tesque Co., Ltd.) as a plasticizing agent were added to 200 g of the aqueous solution obtained as described above to prepare a foaming material composite of Example 1. The viscosity of this foaming material composite was 3.2 × 10³(Pa·s).

This foaming material composite was then stirred by a kitchen mixer to form a wet state of the foamed material. Then, this foamed material was spread over a metal tray and allowed to air-dry at room temperature over two days to prepare a foamed material. The foamed material thus dried was cut out at a size of 30 mm × 30 mm to obtain a sample and the weight and thickness of the sample were measured. As a result, the weight of the sample was 13.5 g and the thickness thereof was 3.75 mm. Based on these measured values, the apparent density thereof was determined as being 0.088 g/cm³ and the expansion ratio thereof was determined as being about ×10.4.

Further, an aqueous solution containing the foamed material at a concentration of 5% by weight was prepared and the time required for completely dissolving the foamed material (dissolving time) was measured. In this example, the foamed material was completely dissolved taking 25 minutes. Thus, it was recognized from this result that if at least a period of 60 minutes was spared for the dissolving time, the foamed material has a sufficient water solubility.

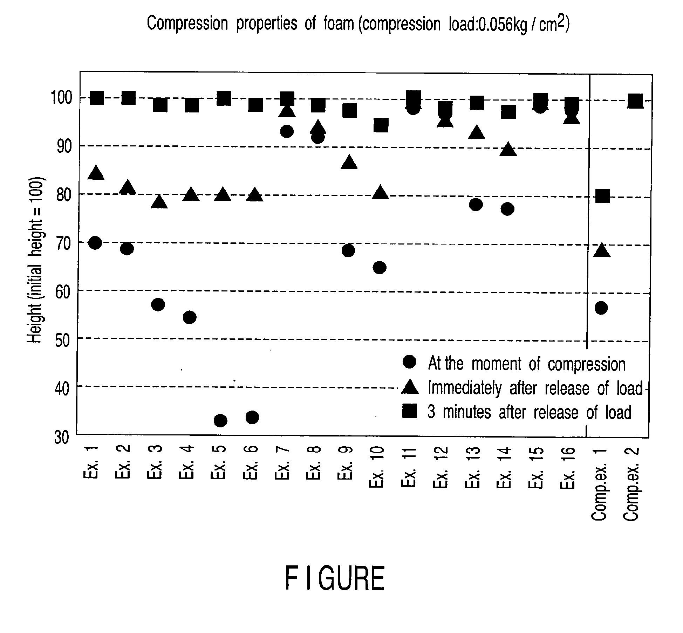

Further, the compression strain of the foamed material prepared as described above was measured. The sample to be employed for this test of compression strain was prepared by laminating cut pieces of foamed material to fabricate a cubic body about 3 cm in every sides. This sample was subjected to compression by imposing a constant load (0.056 kg/cm²) thereon for a predetermined period of time (3 hours). Then, the sample was released from the load. Then, the height of the sample immediately after the release of load was measured to calculate the ratio thereof to the initial height of the sample, thus determining the compression strain. Furthermore, the height of the sample three minutes after the release of load was measured to calculate the ratio thereof to the initial height of the sample, thus determining the compression set. The results are shown in the graph of FIG. 1. Incidentally, the height of the sample at the time of compression is also shown in the graph.

The foamed material according to this example was found to have a sufficient water solubility and was also excellent in compression characteristics as shown in the graph of FIG. 1.

### (Example 2)

The foamed material obtained in Example 1 was left to stand for 24 hours under a load of 0.056 kg/cm², after which the foamed material was reproduced. In this reproducing, the foamed material was dissolved in water to prepare an aqueous solution containing the foamed material at a concentration of 5% by weight. The viscosity of this aqueous solution thus obtained was 2.8 × 10³(Pa·s). This aqueous solution was then stirred by a kitchen mixer to form a wet state of the foamed material. Then, this foamed material was spread over a metal tray and allowed to air-dry at room temperature over two days to reproduce a foamed material. When the sample prepared to have the same size as that of Example 1 was investigated, the thickness of the sample was 3.25 mm, the apparent density thereof was 0.156 g/cm³, and the expansion ratio thereof was determined as being about ×5.8.

Further, an aqueous solution containing the reproduced foamed material at a concentration of 5% by weight was prepared and the dissolving time was measured. As a result, the reproduced foamed material was completely dissolved taking 30 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 3)

First of all, propylene glycol alginate (a decomposed material of KIMILOID HV; weight average molecular weight Mw: about 70,000; KIMICA Co., Ltd.) was prepared as a water-soluble polysaccharide and dissolved in water at a concentration of 5% by weight to obtain an aqueous solution. Then, the foaming material composite of this example was prepared by following the same procedure as described in Example 1 except that the aqueous solution prepared as described above was employed. The viscosity of this foaming material composite thus obtained was 2.5 × 10³(Pa·s).

By using this foaming material composite, a foamed material was prepared by following the same procedure as described in Example 1. When the sample prepared to have the same size as that of Example 1 was investigated, the weight of the sample was 13.3 g, the thickness thereof was 3.35 mm, the apparent density thereof was 0.112 g/cm³, and the expansion ratio thereof was about ×8.1.

Further, an aqueous solution containing the foamed material of this example at a concentration of 5% by weight was prepared and the dissolving time was measured. As a result, the foamed material was completely dissolved taking 20 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 4)

The foamed material obtained in Example 3 was left to stand for 24 hours under a load of 0.056 kg/cm², after which the foamed material was reproduced by following the same procedure as described in Example 2. The viscosity of the aqueous solution prior to the reproducing (prior to foaming) was 2.0 × 10³(Pa·s). When the sample prepared to have the same size as that of Example 1 was investigated, the thickness of the sample was 3.13 mm, the apparent density thereof was 0.144 g/cm³, and the expansion ratio thereof was about ×6.3.

Further, an aqueous solution containing the reproduced foamed material at a concentration of 5% by weight was prepared and the dissolving time was measured. As a result, the reproduced foamed material was completely dissolved taking 20 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 5)

The foaming material composite of this example was prepared by following the same procedure as described in Example 1 except that 4.7 g of glycerin was employed as the plasticizing agent. The viscosity of this foaming material composite thus obtained was 1.5 × 10³(Pa·s).

By using this foaming material composite, a foamed material was prepared by following the same procedure as described in Example 1. When the sample prepared to have the same size as that of Example 1 was investigated, the weight of the sample was 15.4 g, the thickness thereof was 2.78 mm, the apparent density thereof was 0.108 g/cm³, and the expansion ratio thereof was about X8.5.

Further, an aqueous solution containing the foamed material of this example at a concentration of 5% by weight was prepared and the dissolving time was measured. As a result, the foamed material was completely dissolved taking 20 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 6)

The foamed material obtained in Example 5 was left to stand for 24 hours under a load of 0.056 kg/cm², after which the foamed material was reproduced by following the same procedure as described in Example 2. The viscosity of the aqueous solution prior to the reproducing (prior to foaming) was 1.3 × 10³(Pa·s). When the sample prepared to have the same size as that of Example 1 was investigated, the thickness of the sample was 2.95 mm, the apparent density thereof was 0.112 g/cm³, and the expansion ratio thereof was about X8.1.

Further, an aqueous solution containing the reproduced foamed material at a concentration of 5% by weight was prepared and the dissolving time was measured. As a result, the reproduced foamed material was completely dissolved taking 20 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 7)

First of all, propylene glycol alginate (KIMILOID HV; weight average molecular weight Mw: about 100,000; KIMICA Co., Ltd.) was prepared as a water-soluble polysaccharide and dissolved in water at a concentration of 6% by weight to obtain an aqueous solution. 1.2 g of sodium dodecyl sulfate (Wako Junyaku Kogyo Ltd.) as a foaming agent, and 3.3 g of glycerin (Nacalai Tesque Co., Ltd.) as a plasticizing agent were added to 200 g of the aqueous solution obtained as described above to prepare a foaming material composite of this example. The viscosity of this foaming material composite was 5.2 × 10⁴(Pa·s).

This foaming material composite was then stirred by a kitchen mixer to form a wet state of the foamed material. Then, this foamed material was spread over a metal tray and allowed to air-dry at room temperature over two days to prepare a foamed material. When the sample prepared to have the same size as that of Example 1 was investigated, the weight of the sample was 16.2 g, the thickness thereof was 3.96 mm, the apparent density thereof was 0.158 g/cm³, and the expansion ratio thereof was about ×5.8.

Further, an aqueous solution containing the foamed material of this example at a concentration of 5% by weight was prepared and the dissolving time was measured. As a result, the foamed material was completely dissolved taking 20 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 8)

The foamed material obtained in Example 7 was left to stand for 24 hours under a load of 0.056 kg/cm², after which the foamed material was reproduced. In this reproducing, the foamed material was dissolved in water to prepare an aqueous solution containing the foamed material at a concentration of 6% by weight. The viscosity of this aqueous solution thus obtained was 4.0 × 10⁴(Pa·s). This aqueous solution was then stirred by a kitchen mixer to form a wet state of the foamed material. Then, this foamed material was spread over a metal tray and allowed to air-dry at room temperature over two days to reproduce a foamed material. When the sample prepared to have the same size as that of Example 1 was investigated, the thickness of the sample was 3.47 mm, the apparent density thereof was 0.139 g/cm³, and the expansion ratio thereof was determined as being about ×6.5.

Further, an aqueous solution containing the reproduced foamed material at a concentration of 5% by weight was prepared and the dissolving time was measured. As a result, the reproduced foamed material was completely dissolved taking 20 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 9)

The foaming material composite of this example was prepared by following the same procedure as described in Example 1 except that 4.7 g of polyethylene glycol (polymerization degree: 200; Nacalai Tesque Co., Ltd.) was employed as the plasticizing agent. The viscosity of this foaming material composite thus obtained was 2.5 × 10³(Pa·s).

By using this foaming material composite, a foamed material was prepared by following the same procedure as described in Example 1. When the sample prepared to have the same size as that of Example 1 was investigated, the weight of the sample was 15.2 g, the thickness thereof was 3.53 mm, the apparent density thereof was 0.123 g/cm³, and the expansion ratio thereof was about ×7.4.

Further, an aqueous solution containing the foamed material of this example at a concentration of 5% by weight was prepared and the dissolving time was measured. As a result, the foamed material was completely dissolved taking 15 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 10)

The foamed material obtained in Example 9 was left to stand for 24 hours under a load of 0.056 kg/cm², after which the foamed material was reproduced by following the same procedure as described in Example 2. The viscosity of the aqueous solution prior to the reproducing (prior to foaming) was 1.9 × 10³(Pa·s). When the sample prepared to have the same size as that of Example 1 was investigated, the thickness of the sample was 3.31 mm, the apparent density thereof was 0.110 g/cm³, and the expansion ratio thereof was about ×8.3.

Further, an aqueous solution containing the reproduced foamed material at a concentration of 5% by weight was prepared and the dissolving time was measured. As a result, the reproduced foamed material was completely dissolved taking 20 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 11)

First of all, propylene glycol alginate (KIMILOID HV; weight average molecular weight Mw: about 100,000; KIMICA Co., Ltd.) was prepared as a water-soluble polysaccharide and dissolved in water at a concentration of 5% by weight to obtain an aqueous solution. Further, sodium alginate (Nacalai Tesque Co., Ltd.); weight average molecular weight Mw: about 130,000) was prepared as a salt of water-soluble polysaccharide and dissolved in water at a concentration of 5% by weight to obtain an aqueous solution of salt. 100 g of the former aqueous solution was mixed with 100 g of the latter aqueous solution to prepare a mixed solution, to which 1g of sodium dodecyl sulfate (Wako Junyaku Kogyo Ltd.) as a foaming agent, and 4.7 g of glycerin (Nacalai Tesque Co., Ltd.) as a plasticizing agent were added to prepare a foaming material composite of this example. The viscosity of this foaming material composite was 2.2 × 10³(Pa·s).

By using this foaming material composite, a foamed material was prepared by following the same procedure as described in Example 1. When the sample prepared to have the same size as that of Example 1 was investigated, the weight of the sample was 15.3 g, the thickness thereof was 4.85 mm, the apparent density thereof was 0.165 g/cm³, and the expansion ratio thereof was about ×5.5.

Further, an aqueous solution containing the foamed material of this example at a concentration of 5% by weight was prepared and the dissolving time was measured. As a result, the foamed material was completely dissolved taking 30 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 12)

The foamed material obtained in Example 11 was left to stand for 24 hours under a load of 0.056 kg/cm², after which the foamed material was reproduced by following the same procedure as described in Example 2. The viscosity of the aqueous solution prior to the reproducing (prior to foaming) was 1.4 × 10³(Pa·s). When the sample prepared to have the same size as that of Example 1 was investigated, the thickness of the sample was 3.91 mm, the apparent density thereof was 0.225 g/cm³, and the expansion ratio thereof was about ×4.0.

Further, an aqueous solution containing the reproduced foamed material at a concentration of 5% by weight was prepared and the dissolving time was measured. As a result, the reproduced foamed material was completely dissolved taking 25 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 13)

First of all, propylene glycol alginate (KIMILOID HV; weight average molecular weight Mw: about 100,000; KIMICA Co., Ltd.) was prepared as a water-soluble polysaccharide and dissolved in water at a concentration of 5% by weight to obtain an aqueous solution of ester derivative. Further, a compound where the carboxyl group of alginic acid was substituted by amide group (amide derivative; weight average molecular weight Mw: about 60,000) was prepared and dissolved in water at a concentration of 5% by weight to obtain an aqueous solution of amide derivative. The amide derivative employed herein has the following formula:

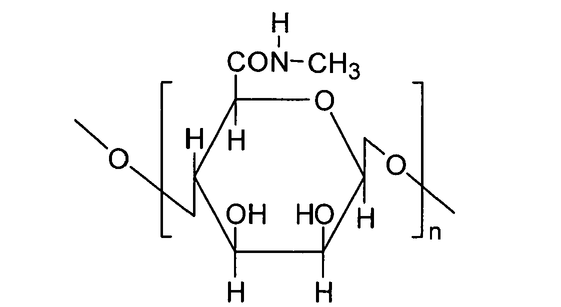

This amide derivative was synthesized according to the following procedure. First of all, 50 mL of THF solution was placed in a 200 mL Erlenmeyer flask and immersed in an ice bath to cool the solution down to about 7 - 8°C. Then, 2.5 g of alginic acid was added to this solution and then 2.9 g of dicyclohexyl carbodiimide was gradually added with stirring by using a stirrer to obtain a mixture. After the additional stirring of this mixture for about 15 minutes, 1.2 mL of 40% solution of methyl amine was added little by little to the mixture. Subsequently, the flask was taken out of the ice bath and the mixture was further stirred for 6 hours while heating it up to room temperature. Then, suspended matter was taken up and allowed to precipitate in 200 mL of methanol and stirred. Subsequently, the precipitate was allowed to dry at room temperature for 2 hours to obtain the amide derivative (yield: 2.6 g of scale).

120 g of an aqueous solution of the ester derivative was mixed with 80 g of an aqueous solution of the amide derivative to prepare a mixed solution, to which 1g of sodium dodecyl sulfate (Wako Junyaku Kogyo Ltd.) as a foaming agent, and 4.7 g of glycerin (Nacalai Tesque Co., Ltd.) as a plasticizing agent were added to prepare a foaming material composite of this example. The viscosity of this foaming material composite thus was 1.2 × 10¹(Pa·s).

By using this foaming material composite, a foamed material was prepared by following the same procedure as described in Example 1. When the sample prepared to have the same size as that of Example 1 was investigated, the weight of the sample was 15.0 g, the thickness thereof was 2.34 mm, the apparent density thereof was 0.269 g/cm³, and the expansion ratio thereof was about ×3.4.

Further, an aqueous solution containing the foamed material of this example at a concentration of 5% by weight was prepared and the dissolving time was measured. As a result, the foamed material was completely dissolved taking 15 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 14)

The foamed material obtained in Example 13 was left to stand for 24 hours under a load of 0.056 kg/cm², after which the foamed material was reproduced by following the same procedure as described in Example 2. The viscosity of the aqueous solution prior to the reproducing (prior to foaming) was 1.0 × 10¹(Pa·s). When the sample prepared to have the same size as that of Example 1 was investigated, the thickness of the sample was 2.21 mm, the apparent density thereof was 0.235 g/cm³, and the expansion ratio thereof was about ×3.9.

Further, an aqueous solution containing the reproduced foamed material at a concentration of 5% by weight was prepared and the dissolving time was measured. As a result, the reproduced foamed material was completely dissolved taking 15 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Example 15)

First of all, propylene glycol alginate (KIMILOID HV; weight average molecular weight Mw: about 100,000; KIMICA Co., Ltd.) was prepared as a water-soluble polysaccharide and dissolved in water at a concentration of 8% by weight to obtain an aqueous solution. 1.6 g of sodium dodecyl sulfate (Wako Junyaku Kogyo Ltd.) as a foaming agent, and 5.8 g of glycerin (Nacalai Tesque Co., Ltd.) as a plasticizing agent were added to 200 g of the aqueous solution obtained as described above to prepare a foaming material composite of this example. The viscosity of this foaming material composite was 1.4 × 10⁷(Pa·s).

By using this foaming material composite, a foamed material was prepared by following the same procedure as described in Example 1. When the sample prepared to have the same size as that of Example 1 was investigated, the weight of the sample was 18.5 g, the thickness thereof was 2.52 mm, the apparent density thereof was 0.458 g/cm³, and the expansion ratio thereof was about ×2.0.

Further, an aqueous solution containing the foamed material of this example at a concentration of 5% by weight was prepared and the dissolving time was measured. As a result, the foamed material was completely dissolved taking 40 minutes. Further, by following the same procedure as described in Example 1, the compression characteristics of the foamed material of this example was measured. The results are shown in the graph of FIG. 1.

The foamed material of this example was found to have a sufficient water solubility and was also excellent in compression characteristics as shown in the graph of FIG. 1.

### (Example 16)

The foamed material obtained in Example 15 was left to stand for 24 hours under a load of 0.056 kg/cm², after which the foamed material was reproduced by following the same procedure as described in Example 2. The viscosity of the aqueous solution prior to the reproducing (prior to foaming) was 9.2 × 10⁶(Pa·s). When the sample prepared to have the same size as that of Example 1 was investigated, the thickness of the sample was 2.83 mm, the apparent density thereof was 0.436 g/cm³, and the expansion ratio thereof was about ×2.1.

Further, an aqueous solution containing the reproduced foamed material at a concentration of 5% by weight was prepared and the dissolving time was measured. As a result, the reproduced foamed material was completely dissolved taking 45 minutes. Further, by following the same procedure as described in Example 1, the compression characteristics of the foamed material reproduced in this example was measured. The results are shown in the graph of FIG. 1.

The reproduced foamed material of this example was found to have a sufficient water solubility and was also excellent in compression characteristics as shown in the graph of FIG. 1.

### (Comparative Example 1)

100 parts by weight of corn starch (water content: 13%), one part by weight of METABLEN P530A (Mitsubishi Rayon Co., Ltd.; a copolymer of methyl methacrylate and alkyl acrylate; molecular weight: 3,100,000), 30 parts by weight of water were mixed together for 10 minutes at 1000 rpm by using a Henschel mixer (Mitsui Miike Kakoki Co., Ltd.) to prepare a mixture. The mixture thus obtained was formed into pellets at a temperature of 100°C by using a test extruder (Laboplast Mill; Toyo Seiki Co., Ltd.) and then allowed to dry to have a water content of 13.5%.

By using the dried pellets, a foamed body of this comparative example was formed at a temperature of 190°C in manufacturing equipment of Shock-Absorbing Packing Materials. A piece of sheet having a thickness of about 3 mm was skived from the surface of the foamed body thus obtained and cut into a 3 cm × 3 cm sheet and laminated to a height of about 3 cm, thus fabricating a sample. By using this sample, the compression strain of the foamed body was measured.

Further, an aqueous solution containing the foamed material of this comparative example at a concentration of 5% by weight was prepared and the dissolving time was measured. As a result, the foamed material was collapsed taking 15 minutes. However, even when this aqueous solution was further left to stand, the foamed material could not be completely dissolved. Further, by following the same procedure as described in Example 1, the compression characteristics of the foamed material of this example was measured. The results are shown in the graph of FIG. 1.

Since the foamed material of this comparative example was insufficient in water solubility, it was impossible to reproduce the foamed material even if the method according to the embodiment of the present invention was applied thereto. Moreover, as shown in the graph of FIG. 1, the durability and restoring force of the foamed material to the compression were also poor. Therefore, it will be recognized that once a pressure is applied to the foamed material, the function of the foamed material would be easily deteriorated, indicating insufficiency in durability for a long-term service.

### (Comparative Example 2)

First of all, sodium alginate (Nakarai Tesk Co., Ltd.; polymerization degree: 650) was dissolved in water at a concentration of 3% by weight to obtain an aqueous solution. The viscosity of this aqueous solution was 1.5(Pa·s). To 100 g of this aqueous solution was added 0.1 g of sodium dodecyl sulfate as a foaming agent (Wako Junyaku Industries Ltd.) to obtain a mixed solution.

The mixed solution thus obtained was stirred by a kitchen mixer to form a foam. The foam was then spread over the surface of tray and allowed to crosslink by using a 5 wt% solution of calcium chloride. More specifically, the crosslinking of sodium alginate was performed through an ion-exchange reaction between sodium ion and calcium ion. Thereafter, the foam was allowed to dry to prepare the foamed material of this comparative example. This dried foam was found to have a thickness of 0.05 mm and an apparent density of 7 g/cm³.

The foamed material thus manufactured corresponds to a foamed material where conventional polysaccharides are employed. In the case of the foamed material employing conventional polysaccharides, the stability of cells are secured through the crosslinking by cation of bivalent or polyvalent or by solidification.

When it was tried to prepare an aqueous solution containing the foamed material of this comparative example at a concentration of 5% by weight, it was impossible to obtain the aqueous solution due to insolubility of the foamed material. Further, by following the same procedure as described in Example 1, the compression characteristics of the foamed material of this example was measured. The results are shown in the graph of FIG. 1.

Since the foamed material of this comparative example was insoluble in water, it was impossible to reproduce the foamed material even if the method according to the embodiment of the present invention was applied thereto. Moreover, as shown in the graph of FIG. 1, since the foamed material was incapable of exhibiting buffering action, the foamed material is not suited for use as a durable goods. Namely, this foamed material is too poor in flexibility to use it as a buffering or structural material and, moreover, it would be difficult to easily dispose this foamed material after use.

Following Table 1 shows the environmental adaptability, compressibility, compression set and water solubility of the foamed materials of Examples and of Comparative Examples. Incidentally, Table 1 also shows these properties of conventional petroleum-based foamed material.

**Table 1**

| | Environmental adaptability | Compressibility | Compression set | Water solubility |
|---|---|---|---|---|
| Ex. | ○ | 20-40% | 0-2% | Easily soluble |
| Comp. Ex. 1 | ○ | 40-50% | 20-30% | Collapsed/insoluble |
| Comp. Ex. 2 | ○ | 0% | - | Insoluble |
| Petroleum-based foam | × | 10-20% | 0-2% | Insoluble |

As shown in Table 1, the foamed materials according to the examples of the present invention are effective in minimizing environmental load since they include, as raw materials, water-soluble polysaccharides. Furthermore, the foamed materials according to the examples of the present invention are not only comparative to or more excellent than the petroleum-based foamed material with respect to the compressibility and compression set, but also capable of exhibiting sufficient restoring force against compression and resistance against the deterioration of buffering function. The foamed materials according to the embodiment of the present invention are widely applicable to various purposes. Namely, they can be employed as a buffering material or as a structural material by suitably changing the composition of the foaming material composite to be employed as a raw material.

Additionally, since the foamed materials according to the embodiment of the present invention are water-soluble, they can be easily dissolved after use to obtain an aqueous solution. Depending on circumstances, the aqueous solution may be discarded into sewage or scattered into soil, thereby using it as a fertilizer. Especially, according to the embodiment of the present invention, the aqueous solution thus obtained can be cast-molded and dried, thereby making it possible to easily reproduce the foamed material.

According to the present invention, there is provided a foamed material which is capable of minimizing the environmental load, capable of exhibiting excellent buffering strength and restoring force, and capable of exhibiting excellent water solubility. Furthermore, there are also provided a composite for manufacturing such a foamed material and a method of reproducing such a foamed material.

## Claims

1. A foaming material composite **characterized by** comprising:
a water-soluble polysaccharide having ester linkage or amide linkage;
a foaming agent; and
a plasticizing agent.

2. The foaming material composite according to claim 1, **characterized in that** the water-soluble polysaccharide having ester linkage or amide linkage is alginates or alginic amide.

3. The foaming material composite according to claim 2, **characterized in that** the alginates or alginic amide is selected from the group consisting of alginic acid derivatives where the carboxylic moiety thereof is esterified; hyaluronic acid derivatives where the carboxylic moiety thereof is esterified; alginic acid derivatives where the carboxylic moiety thereof is amidated; hyaluronic acid derivatives where the carboxylic moiety thereof is amidated; derivatives where carrageenan, agar, xanthan gum, Gellan gum, pectin, chitosan, starch, amylose or amylopectin is esterified or amidated; artificial derivatives where aforementioned materials are artificially modified so as to become physiologically acceptable; esters where aforementioned materials are condensed through dehydration with alcohols having an optional number of carbon atom; artificial derivatives of polysaccharides which ordinarily do not contain carboxylic group; and chitin derivatives where carboxyl group is introduced.

4. The foaming material composite according to claim 1, **characterized in that** the water-soluble polysaccharide is a derivative thereof which is 100% esterified.

5. The foaming material composite according to any preceding claim, **characterized in that** the foaming agent is a surfactant selected from ionic surfactants and nonionic surfactants.

6. The foaming material composite according to claim 5, **characterized in that** the ionic surfactant is selected from the group consisting of sodium stearate, sodium dodecyl sulfate, α-olefin sulfonate, sulfoalkyl amide, monocarboxy coco imidazoline compound, dicarboxy coco imidazoline compound, sulfonated aliphatic polyoxyethylene quaternary nitrogen compound, octylphenol ethoxylate, modified linear aliphatic polyethers, and sorbitan esters.

7. The foaming material composite according to any of claims 1 to 4, **characterized in that** the foaming agent is incorporated at an amount of 1-10% by weight based on 100% by weight of the foaming material composite.

8. The foaming material composite according to any preceding claim, **characterized in that** the plasticizing agent is selected from the group consisting of glycerol, glucose, polyhydric alcohol, triethanol amine and stearate.

9. The foaming material composite according to any of claims 1 to 7, **characterized in that** the plasticizing agent is incorporated at an amount of 20-40% by weight based on 100% by weight of the foaming material composite.

10. The foaming material composite according to any preceding claim, **characterized by** further comprising a quantity of water which enable the foaming material composite to have a viscosity ranging from 1.0 × 10¹(Pa·s) to 1.5 × 10⁷(Pa·s).

11. A foamed material **characterized by** comprising:
a matrix containing a water-soluble polysaccharide having ester linkage or amide linkage, a foaming agent, and a plasticizing agent; and
cells dispersed in the matrix and created by the foaming agent.

12. The foamed material according to claim 11, **characterized in that** the water-soluble polysaccharide having ester linkage or amide linkage is alginates or alginic amide.

13. The foamed material according to claim 11, **characterized in that** the foaming agent is a surfactant selected from ionic surfactants and nonionic surfactants.

14. The foamed material according to any of claims 11 to 13, **characterized in that** the plasticizing agent is selected from the group consisting of glycerol, glucose, polyhydric alcohol, triethanol amine and stearate.

15. The foamed material according to any of claims 11 to 14, **characterized in that** the cells have a diameter ranging from 5 to 2000 µm.

16. The foamed material according to any of claims 11 to 15, **characterized in that** the cells have a diameter ranging from 50 to 500 µm.

17. A method of reproducing a foamed material **characterized by** comprising:
forming an aqueous solution by dissolving the foamed material of claim 11 in water;
foaming the aqueous solution; and
removing the water from the aqueous solution to obtain a reproduced foamed material.

18. The method according to claim 17, **characterized in that** the aqueous solution is formulated to have a viscosity ranging from 1.0 × 10¹(Pa·s) to 1.5 × 10⁷(Pa·s).

19. The method according to either of claims 17 or 18, **characterized in that** the aqueous solution is heated to a temperature of not more than 80°C.

20. The method according to any of claims 17 to 19, **characterized in that** the removal of water is performed through drying treatment at room temperature or at a temperature of not higher than the melting point of water.
